# DEMANDE DE BREVET EUROPEEN

(11) **EP 0 694 424 A1**
(43) Date de publication de la demande: **31.01.1996**
(21) Numéro de dépôt: 95401595.4
(22) Date de dépôt: 04.07.1995
(51) Int. Cl.: B60J 1/20, E06B 9/40

(54) **Store à enrouleur**

(30) Priorité: 29.07.1994 FR 9409452
(71) Demandeur: FARNIER & PENIN SNC, F-79300 Bressuire (FR)
(72) Inventeur: Ouvrard, Gaston, F-79300 Bressuire (FR)
(74) Mandataire: Robert, Jean-Pierre

(57) **Abrégé**

Le store à enrouleur (20) comporte une toile (6) ayant un bord libre équipé d'une barre de tirage (10) et comportant un premier segment (9a) parallèle à l'axe d'enroulement (5) et au moins un second segment (9b) incliné par rapport à cet axe en direction du boîtier (2). La barre de tirage (10) est constituée d'une partie (11) fixée au premier segment (9a) et au moins une partie (12) articulée à la partie fixe (11) pour pivoter autour d'un axe sensiblement perpendiculaire au plan contenant la toile (6) déployée. Un cordon souple (14) associé à un moyen de tension élastique (16) relie le sommet (9c) de l'angle formé par le second segment (9b) et le bord latéral (8b) à la barre de tirage (10) en s'étendant travers un support de guidage (15) disposé à l'extrémité libre de la partie articulée (12).

## Description

L'invention concerne de manière générale un store à enrouleur et en particulier une barre de tirage pour une toile de store dont l'extrémité libre comporte un ou plusieurs segments inclinés.

Un store, notamment pour véhicule automobile, comporte un boîtier fixé à une structure voisine d'un bord d'une baie à occulter et contenant un dispositif d'enroulement autour d'un axe d'une toile, dont le bord libre est équipé d'une barre de tirage s'étendant parallèlement à l'axe d'enroulement de la toile et dont les bords latéraux s'étendent perpendiculairement à cet axe. Le dispositif d'enroulement est sollicité par un couple permanent s'opposant au déploiement de la toile et tendant à bloquer la barre de tirage contre le boîtier. Afin d'adapter la forme de la toile déployée à celle de la baie, il est parfois nécessaire de tailler l'extrémité de la toile trapézoïdalement c'est-à-dire avec un bord d'extrémité (celui auquel est fixé la barre de tirage) possèdant un segment transversal ou sensiblement transversal et un segment incliné qui forme un angle avec ce segment transversal et avec le bord latéral de la toile.

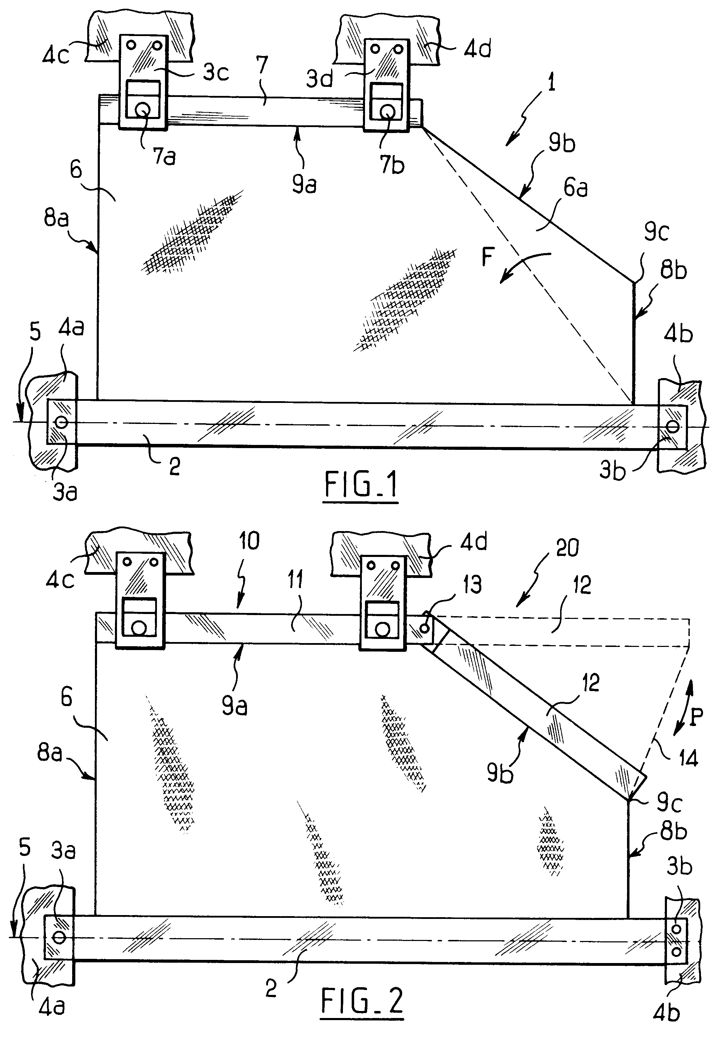

Dans les stores existants, seul le segment transversal est équipé de la barre de tirage et ce afin de permettre l'enroulement complet de la toile à l'intérieur du boîtier. Dans une telle configuration, lorsque la toile est déployée, le segment incliné et le bord latéral auquel celui-ci est raccordé délimitent un pan de toile de forme triangulaire qui tend à se replier sur le plan du reste de la toile déployée, conformément à la représentation de la figure 1.

L'objectif principal de l'invention est de réaliser un store ayant une toile dont le bord libre comporte un segment incliné, dans lequel le défaut de maintien rappelé ci-dessus est supprimé.

En vue de la réalisation de ce but, on prévoit un store à enrouleur constitué d'un boîtier renfermant des moyens d'enroulement autour d'un axe d'une toile ayant deux bords latéraux sensiblement perpendiculaires à l'axe d'enroulement et un bord libre équipé d'une barre de tirage, ce bord libre comportant un premier segment et au moins un second segment incliné par rapport à ce segment et raccordé suivant un angle obtus à un bord latéral, la barre de tirage comportant une partie fixée au premier segment et au moins une partie articulée à la partie fixe pour pivoter autour d'un axe sensiblement perpendiculaire au plan contenant la toile déployée, entre une première position dans laquelle cette partie s'étend le long du second segment et une seconde position dans laquelle cette partie s'étend dans le prolongement de l'autre, tandis qu'un cordon souple ayant une première extrémité fixée à la barre de tirage, s'étend à travers un support de guidage disposé à l'extrémité libre de la partie articulée de la barre de tirage, sa seconde extrémité étant fixée à la toile au niveau du raccord du second segment au bord latéral et est associé à un moyen de tension élastique ayant pour effet de rabattre la partie articulée de la barre de tirage le long du second segment.

Cette disposition assure une liaison entre l'angle du pan de toile tendant à se rabattre et la barre de tirage qui, elle, est rigide, si bien que lorsque la toile est déployée, les deux segments du bord libre de la toile sont maintenus dans un même plan.

Le moyen élastique qui coopère avec le cordon souple peut être constitué par un ressort de traction dont une extrémité est solidaire de la barre de tirage et dont l'autre extrémité est liée au cordon souple. Il peut être également regroupé en un seul organe avec le cordon souple qui alors est élastique en lui-même et est directement attaché à la barre de tirage.

Selon une caractéristique de l'invention, la barre de tirage comporte un moyen de rappel de la partie articulée dans sa seconde position. Ainsi, la partie articulée de la barre de tirage est soumise à un couple de rappel élastique constant qui permet d'éviter un plissement de la toile sous l'effet de son propre poids et de celui de la barre de tirage en exerçant un effort de tension élastique constant de cette toile. Ce moyen de rappel peut être constitué par un ressort de flexion dont les extrémités prennent appui sur les extrémités proches de chacune des parties de la barre de tirage. Il est également possible de réaliser ce moyen de rappel et l'articulation de la barre de tirage en une seule pièce, déformable élastiquement dans le plan de la toile déployée et rigide pour toute autre déformation, formant embout de raccordement des deux parties de la barre de tirage.

Dans la même optique, il est également possible de réaliser une barre de tirage dont la partie fixe comporte une butée angulaire interdisant à la partie articulée de pivoter au-delà de sa première position. Cette butée angulaire remplit alors une fonction analogue à celle du moyen de rappel du premier mode de réalisation : elle empêche la partie articulée de la barre de tirage de s'effondrer sur la toile et de la plisser. En outre, l'emplacement de cette butée est tel que lorsque la partie articulée de la barre de tirage s'étend dans sa première position, son extrémité est éloignée du sommet de la toile, de sorte que le cordon souple assure une tension du bord latéral de la toile.

D'autres caractéristiques et avantages de l'invention apparaîtront à la lecture de la description qui suit d'un mode de réalisation particulier et non limitatif de l'invention, en liaison avec les figures en annexe, parmi lesquelles :
- la figure 1 est une vue schématique de face d'un store connu déployé équipé de façon conventionnelle d'une simple barre de tirage sur le segment de son bord libre qui est parallèle à l'axe d'enroulement ;
- la figure 2 est une vue schématique de face d'un store déployé, équipé d'une barre de tirage selon l'invention;
- la figure 3 est une vue analogue à la figure 2 partiellement en coupe ;
- la figure 4 est une vue analogue à la figure 3, le store étant partiellement reployé ;
- la figure 5 est une vue partielle illustrant le détail d'une variante de réalisation de l'articulation des deux parties de la barre de tirage ;
- les figures 6 et 7 sont des vues analogues à la figure 5 illustrant une autre variante de réalisation de cette articulation.

Conformément à la figure 1, un store connu 1 destiné à occulter une baie (non représentée) comporte un boîtier 2 accroché de manière connue en soi par des pattes 3a et 3b à des éléments de structure 4a et 4b et contenant des moyens d'enroulement (non représentés) autour d'un axe 5 d'une toile 6. Cette toile comporte des bords latéraux 8a et 8b perpendiculaires à l'axe 5 et un bord libre équipé d'une barre de tirage 7.

La plupart des baies à occulter ne sont pas de forme rectangulaire et il est souvent avantageux pour améliorer l'occultation de découper la toile 6 de façon trapézoïdale. C'est pourquoi dans l'exemple représenté, le bord libre de cette toile comporte un premier segment 9a parallèle à l'axe d'enroulement 5 et un second segment 9b incliné par rapport à cet axe. Le premier segment 9a peut ne pas être strictement parallèle à l'axe d'enroulement, au moins lorsque la toile est déployée : il existe en effet des stores dits à rattrapage conique dans lesquels lorsqu'ils se déploient, la barre de tirage s'incline par rapport à l'axe d'enroulement, du fait d'un organe d'enroulement de la toile conique ou étagé. Ce second segment forme avec le bord latéral 8b un angle obtus de sommet 9c. La barre de tirage 7 est fixée à la toile 6 le long du segment 9a et comporte des ergots 7a et 7b coopérant avec des attaches 3c et 3d, fixées à des éléments de structure 4c et 4d, pour s'opposer au reploiement de la toile 6.

Dans une telle configuration, si la toile est suffisamment déployée pour que le sommet 9c de l'angle raccordant le second segment 9b au bord latéral 8b s'étende à l'extérieur du boîtier, ce second segment n'est plus maintenu tendu entre le dispositif d'enroulement et la barre de tirage 7, ce qui conduit à un flottement et, éventuellement, à un rabattement du pan de toile triangulaire délimité par le segment 9b et le bord 8b. Ce flottement est plus ou moins accentué suivant la raideur propre du matériau constituant la toile. Il est symbolisé par la flèche F de la figure 1.

A la figure 2, on a représenté de manière analogue à la figure 1, un store 20 déployé et équipé d'une barre de tirage 10 selon l'invention. Cette barre de tirage est constituée d'une partie 11 fixée à la toile 6 le long du premier segment 9a et d'une partie 12 articulée par son extrémité à l'extrémité de la partie fixe 11 pour pivoter autour d'un axe 13 sensiblement perpendiculaire au plan contenant la toile 6 déployée, entre une première position (représentée en traits pleins) dans laquelle cette partie s'étend le long du second segment 9b du bord de la toile 6 et une seconde position (représentée en traits pointillés) dans laquelle cette partie s'étend dans le prolongement de la partie fixe 11. Ce pivotement est symbolisé par une double flèche P.

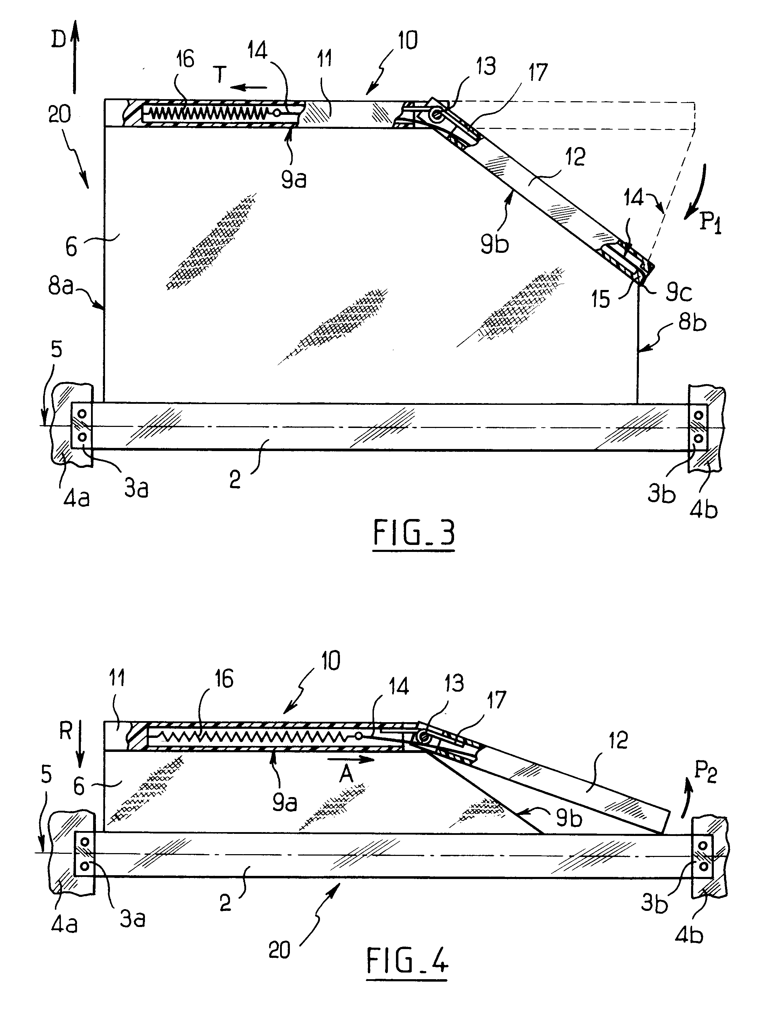

Un cordon souple 14 relie la barre de tirage 10 au sommet 9c de l'angle de raccordement du second segment 9b au bord latéral 8b. Plus précisément, comme représenté aux figures 3 et 4, le cordon souple 14 s'étend à l'intérieur de la barre de tirage 10 qui est ici creuse et traverse un support de guidage 15 disposé à l'extrémité libre de la partie articulée 12 pour être relié au sommet 9c de la toile. Le support de guidage 15 est ici réalisé sous forme d'un embout percé d'un orifice de passage évasé vers l'extérieur. Un ressort de traction 16 logé dans la partie fixe 11 de la barre de tirage est attaché par une de ses extrémités à cette partie et est relié par son autre extrémité au cordon souple 14. Ce ressort assure ainsi la liaison du cordon souple 14 à la barre de tirage 10, de sorte que ce cordon exerce un effort de rappel élastique de la partie 12 contre le sommet 9c de la toile. En outre, le ressort 16 procure au cordon souple 14 une possibilité d'extension car la longueur de celui-ci doit être variable pour que la partie articulée 12 puisse évoluer entre ses deux positions.

Dans le mode de réalisation illustré, la barre de tirage 10 comporte un moyen de rappel 17, exerçant un couple permanent de rappel de la partie articulée 12 vers sa seconde position. Ce moyen est représenté ici sous la forme d'un ressort en épingle enroulé autour de l'axe d'articulation 13 et dont les extrémités prennent appui sur les extrémités proches de chacunes des parties de la barre de tirage 10.

Lorsque le store est déployé, conformément à la figure 3, le ressort de traction 16 tire sur le cordon souple 14 suivant la flèche T de la figure 3, de sorte que la partie articulée 12 est rappelée dans sa première position à l'encontre du ressort 17, comme illustré par la flèche P₁ de la figure 3. On notera à ce propos que la raideur du ressort 17 doit être suffisamment faible en regard de celle du ressort 16 pour permettre ce pivotement. La partie fixe 11 de la barre de tirage 10 est classiquement accrochée par ses pattes 3a et 3b aux éléments de structure 4a et 4b. L'effort exercé par le cordon souple 14 sur le sommet 9c de la toile 6 assure le maintien de ce sommet contre l'extrémité libre de la partie articulée 12 de la barre de tirage 10. Comme cette partie articulée est montée pour pivoter dans le plan de la toile et seulement dans ce plan, il en résulte un maintien du segment 9b et du bord latéral 8b dans ce plan. De plus, le support de guidage 15 est disposé à une distance suffisante de l'axe d'articulation 13 pour que le cordon souple 14 assure, sous l'action du ressort 16, une tension du second segment 9b. Le ressort 17 assure, quant à lui, le rappel élastique de la partie articulée 12 vers sa seconde position et réalise donc une tension du bord latéral 8b de la toile appliquée au sommet 9c, évitant ainsi tout plissement de celle-ci qui pourrait se produire sous l'effet de son propre poids et/ou de celui de la partie articulée de la barre de tirage.

Lors du reploiement de la toile 6 dans le sens de la flèche R de la figure 4, l'extrémité libre de la partie articulée 12 entre en contact avec le boîtier 2. Le moyen d'enroulement de la toile disposé à l'intérieur de ce boîtier exerce sur la toile 6 un effort suffisamment intense pour s'opposer à l'effort de tension du ressort 16 et provoque donc le pivotement, illustré par une flèche P₂, de la partie articulée 12 en direction de sa seconde position ainsi que l'allongement, illustré par une flèche A, du ressort 16 prenant en compte le mouvement d'éloignement de l'extrémité de la partie articulée 12 par rapport au sommet 9c de la toile. Lorsque la partie fixe 11 parvient en butée contre le boîtier 2 et est maintenue plaquée contre celui-ci par le moyen d'enroulement, la partie articulée 12 s'étend dans sa seconde position, c'est-à-dire dans le prolongement de la partie fixe 11. L'extrémité libre de la partie 12 est maintenue plaquée contre le boîtier 2 par la tension du cordon souple 14.

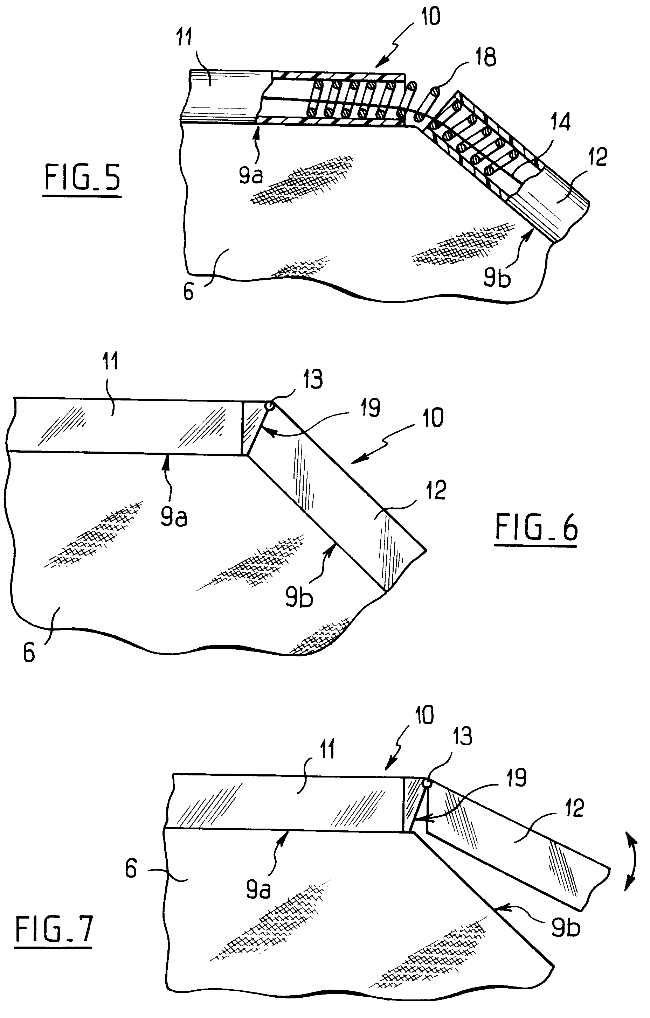

Selon une variante de réalisation de l'articulation de la partie 12 à la partie fixe 11 de la barre de tirage 10, illustrée par la figure 5, un ressort hélicoïdal 18 est emmanché dans les parties 11 et 12, qui sont ici de forme tubulaire. L'articulation de la barre de tirage 10 et le moyen de rappel élastique 17 sont ainsi réalisés en une seule pièce. Le ressort hélicoïdal 18 doit en outre être déformable élastiquement dans le plan de la toile déployée et sensiblement rigide pour toute autre déformation. Il peut être remplacé par tout autre organe élastique formant embout de raccordement et ayant des caractéristiques analogues, tel qu'un manchon en matière plastique élastique de section oblongue.

Selon une autre variante de l'invention, illustrée aux figures 6 et 7, le moyen élastique 17 peut être supprimé et remplacé par une butée angulaire 19 ménagée sur la partie fixe 11. Cette butée interdit à la partie articulée 12 de pivoter au-delà de sa première position et en direction opposée à sa seconde position. Ainsi, lorsque le store est déployé, le sommet 9c de la toile est maintenu par la partie articulée 12 qui reste en butée dans sa première position angulaire. De plus, l'emplacement de cette butée est tel que, lorsque la partie articulée 12 de la barre de tirage s'étend dans sa première position, son extrémité n'est pas en butée contre le sommet 9c de la toile lorsque celle-ci est tendue mais en reste au contraire légèrement éloignée. De cette manière, le cordon souple 14 assure une tension du bord latéral 8b de la toile 6 et évite un éventuel plissement de celui-ci.

L'invention n'est pas limitée aux modes de réalisation qui viennent d'être décrits mais englobe tout dispositif reprennant, avec des moyens équivalents, les caractéristiques énoncées. Par exemple, l'articulation des parties 11 et 12 peut être réalisée selon d'autres modes, notamment sous forme d'une languette ou ligament d'attachement reliant les parties 11 et 12, cette articulation pouvant être réalisée en matière plastique moulée en une seule pièce avec les deux parties de la barre de tirage. Il est également possible de réaliser un store ayant une toile dont le bord libre présente plusieurs segments inclinés, la barre de tirage comportant alors elle-même plusieurs parties articulées les unes aux autres.

## Revendications

1. Store à enrouleur (20) constitué d'un boîtier (2) renfermant des moyens d'enroulement autour d'un axe (5) d'une toile (6) ayant deux bords latéraux (8a, 8b) et un bord libre équipé d'une barre de tirage (10) et composé d'un premier segment (9a) et au moins d'un second segment (9b) incliné par rapport à ce premier segment en direction du boîtier (2) et raccordé suivant un angle obtus à un bord latéral (8b), caractérisé en ce que la barre de tirage (10) comporte une partie (11) fixée au premier segment (9a) et au moins une partie (12) articulée à la partie fixe (11) pour pivoter autour d'un axe (13) sensiblement perpendiculaire au plan contenant la toile (6) déployée, entre une première position dans laquelle cette partie s'étend le long du second segment (9b) et une seconde position dans laquelle cette partie s'étend dans le prolongement de l'autre, en ce qu'elle comporte un cordon souple (14) s'étendant à travers un support de guidage (15) disposé à l'extrémité libre de la partie articulée (12), en ayant une première extrémité fixée à la barre de tirage (10) et une seconde extrémité fixée à la toile (6) au niveau du sommet (9c) de l'angle de raccordement du second segment (9b) au bord latéral (8b), et en ce qu'il comporte un moyen de tension élastique (16) associé au cordon souple (14) et ayant pour effet de rabattre la partie articulée (12) le long du second segment (9b).

2. Store selon la revendication 1, caractérisé en ce que le moyen élastique qui coopère avec le cordon souple (14) est constitué par un ressort de traction (16) dont une extrémité est solidaire de la barre de tirage (10) et dont l'autre extrémité est liée au cordon souple (14).

3. Store selon la revendication 1, caractérisé en ce que le cordon souple et son moyen élastique sont regroupés en un seul organe constitué par un cordon qui est alors élastique en lui-même et est directement attaché à la barre de tirage (10).

4. Store selon l'une des revendications précédentes, caractérisé en ce que la barre de tirage (10) comporte un moyen de rappel (17) de la partie articulée (12) dans sa seconde position.

5. Store selon la revendication 4, caractérisé en ce que le moyen de rappel (17) de la partie articulée (12) est constitué par un ressort de flexion (17) dont les extrémités prennent appui sur les extrémités proches de chacune des parties de la barre de tirage (10).

6. Store selon la revendication 4, caractérisé en ce que le moyen de rappel (17) et l'articulation de la partie articulée (12) sont réalisés en une seule pièce déformable élastiquement dans le plan de la toile déployée et rigide pour toute autre déformation, formant embout de raccordement des deux parties de la barre de tirage (10).

7. Store selon l'une des revendications 1 à 3, caractérisé en ce que la partie fixe (11) comporte une butée angulaire (19) interdisant à la partie articulée (12) de pivoter au-delà de sa première position.

8. Store selon la revendication 7, caractérisé en ce que l'emplacement de la butée angulaire (19) est tel que, lorsque la partie articulée (12) de la barre de tirage (10) s'étend dans sa première position, le support de guidage (15) est éloigné du sommet (9c) susdit.
